# FASCICULE DE BREVET EUROPEEN

(11) **EP 2 582 002 B1**
(45) Date de publication et mention de la délivrance du brevet: **22.05.2019**
(21) Numéro de dépôt: 12188337.5
(22) Date de dépôt: 12.10.2012
(51) Int. Cl.: H02J 3/16, H02J 3/18, H02J 3/38, H02S 40/32, G05F 1/67, H02S 10/00, G05F 1/70

(54) **Procédé de régulation de la tension dans un réseau comprenant des sources décentralisées**
Spannungsregulierungsverfahren in einem Netz, das dezentralisierte Quellen umfasst
Method for controlling the voltage in a grid comprising decentralised sources

(30) Priorité: 12.10.2011 FR 1159232
(43) Date de publication de la demande: 17.04.2013
(73) Titulaire: Electricité de France, 75008 Paris (FR); Electricité Réseau Distribution France, 92085 Paris la Défense Cedex (FR)
(72) Inventeur: Tounsi, Bayram, 75014 PARIS (FR); Malarange, Gilles, 91420 MORANGIS (FR)
(74) Mandataire: Regimbeau

(56) Documents cités:
- WO-A1-99/27629
- CN-A- 102 136 738
- FR-A1- 2 823 381
- FR-A1- 2 894 087
- JP-A- 2009 017 758
- KR-B1- 101 038 274

## Description

### DOMAINE DE L'INVENTION

L'invention concerne le domaine des réseaux de distribution d'électricité comprenant une ou plusieurs sources décentralisées de type photovoltaïque.

La présente invention concerne notamment des perfectionnements apportés en matière de régulation de la tension dans ces réseaux, afin de prévenir les surtensions pouvant être causées par le raccordement desdites sources décentralisées et leurs interactions avec les charges présentes sur la ligne.

### ETAT DE LA TECHNIQUE

Le développement de sources d'énergie décentralisées, particulièrement des installations utilisant l'énergie radiative du soleil, est en pleine expansion. Ceci est dû pour partie à la tendance actuelle écologique, incitant chacun à diversifier les sources d'énergie électrique du mix énergétique, en privilégiant les énergies à faible rejets de gaz à effets de serre, dites « propres » ou « vertes », c'est-à-dire non fossiles et non nucléaires.

Cette incitation est répercutée par certaines législations, qui imposent des tarifs de rachat avantageux de l'électricité verte produite, ce qui tend à multiplier les sources décentralisées d'électricité, typiquement photovoltaïque, puisque de nombreux particuliers ou entreprises acquièrent des panneaux solaires pour leur propre consommation d'électricité et revendent les surplus.

La répartition des installations photovoltaïques raccordées au réseau national montre que la plupart des demandes de raccordement concerne le réseau Basse Tension (BT) (tension inférieure à 1kV, typiquement de l'ordre de plusieurs centaines de volts).

De plus, les très petites productions, c'est-à-dire d'une puissance inférieure ou égale à 3kWc (kilowatt crête), représentent une très large majorité des installations photovoltaïques raccordées au réseau BT.

Ceci signifie que le réseau BT connaît une augmentation massive du nombre de raccordements d'unités de production décentralisées. Or, ces raccordements peuvent influencer localement le profil de tension des lignes électriques, en créant notamment des augmentations de tension, car les unités de production décentralisées apportent au réseau une puissance active.

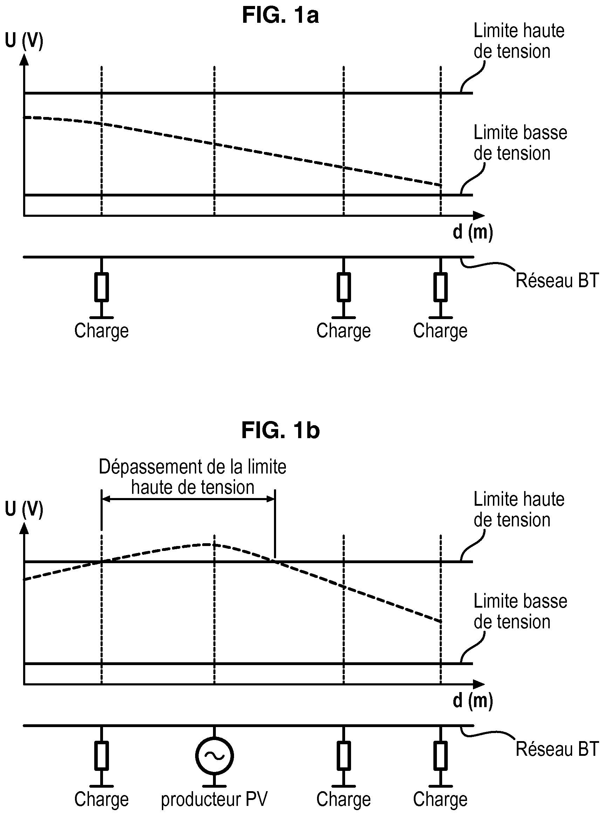

Ce phénomène est illustré en figures 1a et 1b. En figure 1a, est représenté le profil de tension dans un réseau BT sans source d'électricité décentralisée, le long d'une ligne physique de distribution d'électricité comprenant un transformateur source en entrée et une pluralité de charges réparties le long de la ligne. On constate que la tension décroît le long de la ligne de distribution en fonction de la puissance appelée par les consommateurs répartis le long de cette ligne, et en fonction de la distance séparant les consommateurs du transformateur situé au point d'entrée de la ligne.

Dans la figure 1b, une source d'électricité décentralisée dénommée « producteur PV » est raccordée au réseau BT au niveau d'un point de raccordement intermédiaire. Au niveau de ce point la tension est plus importante car le producteur PV injecte de la puissance active dans le réseau.

Or les augmentations de tension peuvent amener la tension dans le réseau à dépasser le seuil maximum autorisé (fixé par un arrêté gouvernemental), et donc provoquer des surtensions, néfastes au bon fonctionnement du réseau.

Pour ajuster le niveau de la tension dans le réseau BT, il existe pour le moment des régleurs statiques appelés prises à vide au niveau des points de raccordement entre le réseau Haute Tension A (HTA) et le réseau BT. Ils permettent de fixer le rapport de transformation entre les niveaux de tension HTA et BT.

Cependant le réglage effectué à ces niveaux n'est pas dynamique, et il ne suffit pas à maintenir la tension du réseau BT dans les plages réglementaires.

Pour résoudre ce problème, on connaît d'après le document FR 2 823 381 le fait de mesurer la tension au niveau du point de raccordement d'une source décentralisée au réseau, et d'effectuer une régulation de la source à partir de ladite mesure, en délivrant à la source un signal de consigne de puissance active et un signal de consigne de facteur de puissance ou de puissance réactive.

Cette solution est imparfaite. En effet, lorsque la consigne concerne la puissance active produite, et que celle-ci est diminuée, le producteur d'électricité, dont la rémunération est indexée sur la puissance active injectée, est désavantagé.

Le document FR 2 894 087 propose quant à lui de mesurer la tension et le courant dans le réseau au niveau du point de raccordement de la source décentralisée, et d'agir sur la source décentralisée d'électricité en priorité en absorbant ou en produisant de la puissance réactive, et en augmentant ou en réduisant la puissance active délivrée par la source quand celle-ci a atteint une limite de puissance réactive absorbée ou produite.

Cette solution ne résout pas le problème mentionné ci-avant, car la puissance active peut être diminuée quand la limite de puissance réactive à absorber est atteinte.

Il existe donc un besoin pour une solution alternative au problème de régulation de tension dans un réseau comprenant des sources de productions décentralisées.

Le document JP 2009 017758 divulgue un procédé de gestion d'une unité de production d'électricité et une unité de production conformes aux préambules des revendications indépendantes annexées.

### PRESENTATION DE L'INVENTION

En conséquence, un des buts de la présente invention est de permettre de réguler la tension d'un réseau au niveau du raccordement d'une source décentralisée.

Un autre but de l'invention est de ne pas léser un producteur d'électricité en diminuant la puissance active qu'il injecte dans le réseau.

A cet égard, l'invention propose un procédé de gestion d'une unité de production d'électricité décentralisée photovoltaïque raccordée à un réseau électrique alternatif basse tension, tel que défini en revendication 1 annexée.

Avantageusement, mais facultativement, le procédé de gestion selon l'invention peut en outre comprendre au moins l'une des caractéristiques suivantes :
- la tension utilisée est une moyenne sur une période égale à trois secondes.
- la puissance réactive échangée par l'onduleur est une fonction affine de la tension mesurée au point de raccordement quand celle-ci est comprise entre la tension nominale du réseau, majorée de 10%, et une tension inférieure, dont la valeur dépend des paramètres de l'onduleur.
- l'onduleur photovoltaïque absorbe une puissance réactive croissante avec la tension mesurée au point de raccordement.

L'invention concerne également une unité de production d'électricité décentralisée photovoltaïque raccordée à un réseau électrique, telle que définie en revendication indépendante 5 annexée.

Avantageusement, mais facultativement, l'unité de production selon l'invention peut en outre comprendre au moins l'une des caractéristiques suivantes :
- l'asservissement reçoit un courant continu et une tension mesurée au point de raccordement, et comprend un niveau de génération d'une commande de puissance réactive en fonction de la tension mesurée, un niveau de génération de la tension continue en entrée d'un onduleur en tension, et de la tension de commande d'une MLI disposée à un niveau de commande de l'onduleur, l'onduleur étant
   disposé à un niveau de système, et délivrant un courant alternatif de puissance réactive correspondant à la commande.

L'invention concerne enfin un réseau de distribution d'électricité comprenant au moins une unité de production d'électricité décentralisée photovoltaïque selon l'invention.

Avantageusement, mais facultativement, le réseau de distribution peut en outre comprendre une pluralité d'unités de production d'électricité décentralisées, les tensions mesurées aux points de raccordement étant moyennées selon des temps réglés aléatoirement.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :
- les figures 1a et 1b précédemment décrites représentent des profils de tension dans un réseau BT respectivement avec et sans production décentralisée d'électricité,
- la figure 2 représente le schéma de principe classique d'une unité de production photovoltaïque raccordée à un réseau,
- la figure 3 illustre schématiquement l'architecture de l'asservissement d'un onduleur photovoltaïque en fonction de la tension au point de raccordement de la source décentralisée conformément à la présente invention,
- la figure 4 représente la consigne d'asservissement selon l'invention d'un onduleur en fonction de la tension au point de raccordement.
- La figure 5 est un exemple de paramètres de réglage de l'asservissement de l'onduleur selon l'invention,
- Les figures 6a et 6b sont un exemple de modélisation d'un système asservi selon l'invention,
- La figure 7 représente des résultats d'essais réalisés sur terrain de la régulation de tension selon l'invention.

### DESCRIPTION DETAILLEE DE L'INVENTION

On rappelle brièvement que, pour un régime alternatif, on appelle puissance active (généralement notée P) la partie réelle de la puissance P=U.I.cos(ϕ), où ϕ est le déphasage entre la tension et le courant, et la puissance réactive (notée Q) la partie imaginaire de la puissance complexe Q=U.I.sin(ϕ).

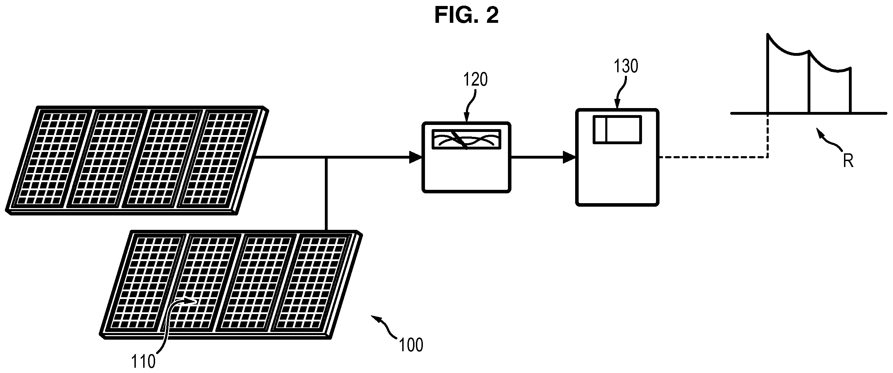

En référence à la figure 2, est représentée une unité de production 100 d'électricité décentralisée photovoltaïque raccordée à un réseau électrique R, de préférence un réseau Basse Tension.

Cette unité comprend une source électrique 110, de préférence un ou plusieurs panneaux solaires photovoltaïques, un onduleur 120 photovoltaïque, et un compteur de production 130.

L'onduleur 120 comprend un bus continu et un convertisseur boost (non représentés sur les figures), qui reçoivent un courant continu des panneaux photovoltaïques 110 et extraient de ceux-ci le maximum de puissance.

L'onduleur comprend en outre un onduleur de tension 123, qui convertit le courant continu issu des panneaux photovoltaïques en courant alternatif à la fréquence du réseau de distribution d'électricité.

Selon l'invention, on mesure la tension dans le réseau R au niveau du point de raccordement de l'unité 100, par exemple par un transformateur de mesure de tension, et en fonction de la valeur de cette tension, on pilote l'onduleur 120 afin d'adapter la puissance réactive qu'il échange avec le réseau et d'absorber les surtensions potentielles. En particulier, l'onduleur 120 absorbe une puissance réactive pour diminuer la tension au point de raccordement de l'unité 100.

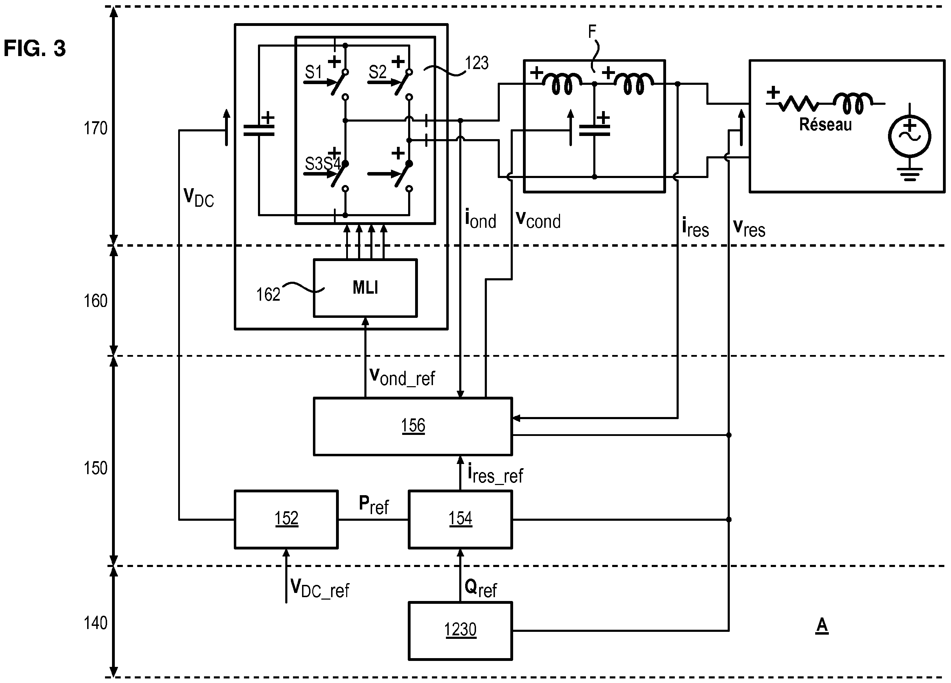

A titre d'exemple non limitatif, on a représenté en figure 3 une réalisation possible d'un onduleur 123 et un asservissement A de celui-ci en fonction de la tension mesurée au point de raccordement.

L'asservissement comprend quatre niveaux successifs : un premier niveau 140 dit de supervision, un second niveau 150 dit de routines de contrôle du convertisseur, un troisième niveau 160 dit de contrôle des commutations, et un quatrième niveau 170 de système.

L'onduleur 123 peut être, au niveau 170 du système, un onduleur en pont composé de quatre interrupteurs S1, S2, S3, S4, typiquement des IGBT (Insulated-gate bipolar transistor, i.e. transistor bipolaire à grille isolée). Les quatre interrupteurs sont disposés sur deux branches parallèles reliées aux bornes d'un module 152 de contrôle de la tension délivrée par le bus continu de l'onduleur 120 en sortie de la source 110. Chaque branche comprend deux interrupteurs en série, respectivement S1 et S3 pour la première branche et S2 et S4 pour la seconde. L'ouverture et la fermeture de chaque interrupteur est pilotée par une commande respective. Les points milieux des deux branches de l'onduleur forment les bornes de sortie de celui-ci.

L'ouverture et la fermeture successives de ces interrupteurs est cadencé au niveau 160 du contrôle de commutations par une «MLI» 162 (Modulation de Largeur d'Impulsion), afin d'obtenir, à partir d'un courtant continu en entrée, un courant alternatif de fréquence adaptée en sortie.

Pour réaliser la boucle d'asservissement de l'onduleur, la tension Vᵣₑₛ du réseau est mesurée, et au premier niveau 140 de supervision, on déduit de cette tension dans un module 1230 une consigne de puissance réactive Q_{ref} à échanger, en l'occurrence à absorber dans le réseau

Au niveau 150 de routines de contrôle du convertisseur, une consigne de puissance active P_{ref} à injecter dans le réseau, ainsi que la tension nominale délivrée par le bus continu sont fixées par le module 152 (c'est la boucle de régulation du bus continu qui permet de fixer la consigne de puissance active) en fonction de la tension de référence du bus continu V_{DC_ref}.

En outre les consignes en puissance réactive Q_{ref} et active P_{ref} sont délivrées au module 154, ce qui lui permet de calculer la consigne de courant i_{res_ref} à injecter dans le réseau.

En fonction de ces consignes, une tension V_{ond_ref} de contrôle de l'onduleur 123 est déterminée par un module 156. La boucle de régulation du courant permet de créer trois tensions appelées modulantes qui seront superposées à un signal triangulaire pour fixe l'ordre de commutation des interrupteurs de puissance IGBT (ce fonctionnement est classique. La tension V_{ond_ref} est utilisée pour commander les interrupteurs S1 à S4 et obtenir le courant alternatif de puissances active et réactive correspondant aux consignes.

Au niveau 170 du système, en plus du pont d'interrupteurs S1 à S4, se trouve un filtre F en « T », relié aux bornes de sortie du pont d'interrupteurs, et comprenant deux inductances en série sur la barre du T et un condensateur sur le pied du T pour limiter les harmoniques causées par le découpage. La tension V_{cond} de commande de ce condensateur est également régie par le module 156.

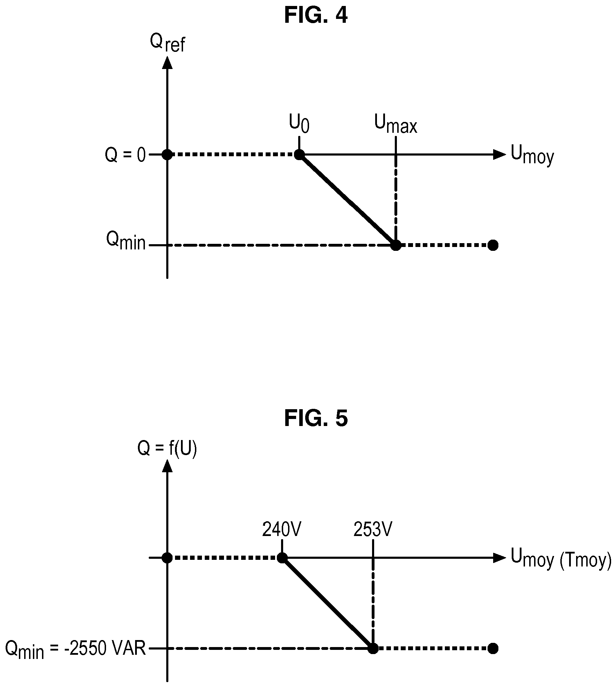

On va maintenant décrire plus en détails la façon dont la consigne de puissance réactive Q_{ref} est déduite de la tension Vᵣₑₛ au niveau du point de raccordement. Cette consigne en fonction de la tension est illustrée en figure 4.

Tout d'abord, la boucle d'asservissement de l'onduleur 123 ne doit pas réagir trop rapidement aux périodes transitoires d'installation de la tension. On utilise donc une moyenne temporelle U de la tension Vᵣₑₛ au niveau du point de raccordement, la moyenne étant réalisée sur une période supérieure à la seconde, et avantageusement sur une période de trois secondes.

En outre, on fixe la puissance réactive maximale à absorber, qui est une puissance négative minimale à délivrer, Qₘᵢₙ en fonction de la tension maximale autorisée sur le réseau Uₘₐₓ et en fonction du facteur de puissance réactive maximum de l'onduleur tan(ϕ)ₘₐₓ.

La tension maximale Uₘₐₓ autorisée sur le réseau correspond à la tension nominale Uₙ du réseau majorée de 10%. Elle dépend donc du réseau.

En l'occurrence la tension maximale Uₘₐₓ ne doit pas dépasser 253V sur un réseau BT ayant une tension nominale d'une valeur de 230V.

On choisit donc Qₘᵢₙ (puissance réactive maximale à absorber par l'onduleur) = -P*tan (phimax). Le facteur de puissance maximum de l'onduleur est un paramètre défini à la construction et garanti par les fabricants d'onduleurs.

Ainsi, par construction, on connaît par avance la puissance réactive maximale que l'onduleur peut être amené à absorber. Cette limite n'est donc pas dépassée, et l'invention permet de ne plus recourir à la puissance active générée par les panneaux photovoltaïques. Ainsi le producteur d'électricité n'est pas lésé par le fait de réguler la tension sur le réseau.

Ensuite on détermine une loi affine Q=f(U), où Q vaut 0 quand U₀ atteint une valeur minimale déterminée au préalable. La valeur de U₀ dépend du réseau auquel est raccordé l'onduleur 12. Il s'agit de la valeur seuil de la tension qui doit être régulée, typiquement 240V pour un réseau BT (la valeur 240 V a été choisie à titre d'exemple, le choix de cette valeur peut se faire selon une optimisation du niveau de perte sur le réseau).

On obtient la consigne suivante :
- pour U moyennée inférieure à U₀, Q=0,
- pour U moyennée égale à Uₘₐₓ : Q=Qₘᵢₙ,
- pour U moyennée comprise entre U₀ et Uₘₐₓ : Q est une fonction affine de U, de pente Qₘᵢₙ/(Uₘₐₓ-U₀).
L'allure de la courbe Q=f(U) de la figure 4 peut être imaginée avec d'autres formes géométriques, la figure 4 est un exemple mais il peut en avoir d'autres.

En référence à la figure 5, on a représenté un exemple de choix de paramètres de réglage de l'onduleur 123.

La tension maximale Uₘₐₓ vaut 253V, et la tension U₀ vaut 240V.

Pour une installation de puissance active de crête de 3kW et un onduleur présentant un facteur de puissance de 0.8, on a Qₘᵢₙ = -2550VAR.

Plusieurs unités de production décentralisées 100 peuvent être raccordées à un même réseau R.

Dans ce cas, chacune de ces sources 100 comprend un onduleur 120 régulé selon la loi de commande Q=f(U) décrite ci-dessus, U étant la tension moyennée mesurée au point de raccordement de la source correspondante au réseau.

Or on a montré que dans ce cas, la présence de plusieurs onduleurs sur un même départ d'un réseau BT (à partir d'un raccordement HTA/BT) crée des interactions entre les onduleurs. En particulier, si tous les onduleurs sont synchronisés avec le même temps T_{moy} de calcul de la tension moyennée, la régulation de chaque onduleur diffère en régime transitoire de celle qui serait assurée si chaque onduleur était seul.

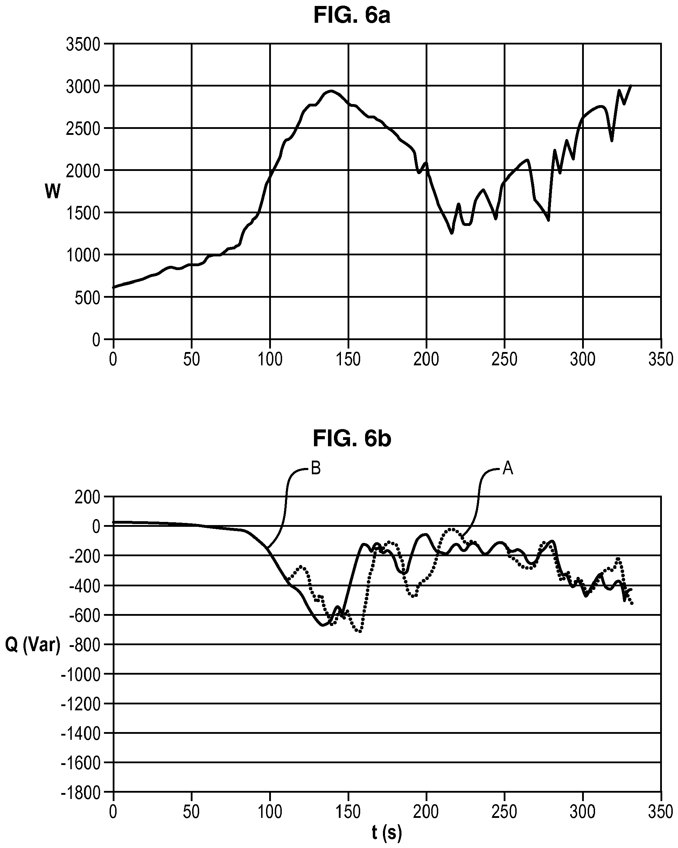

En figure 6a est représenté un profil de production d'une entité de production PV, utilisé pour réaliser des modélisations avec le logiciel EMTP-RV. Les variations de la tension au niveau du raccordement HTA/BT, de la charge au niveau du réseau BT, ou de la production des sources décentralisées.

La figure 6b montre l'évolution de la puissance réactive échangée par un onduleur dans une branche d'un réseau comprenant trois autres onduleurs.

Dans un premier test (courbe A), le temps T_{moy} de calcul de la tension moyennée est synchronisé avec les autres onduleurs à trois secondes. Dans un second test (courbe B), ce temps T_{moy} est choisi de manière variable pour les quatre onduleurs, de sorte qu'ils présentent des temps de calcul différents. En l'occurrence il vaut quatre secondes pour l'onduleur considéré.

On constate que le choix du temps T_{moy} influe sur la qualité de la régulation de l'onduleur en régime transitoire. En particulier, le fait de faire réagir l'onduleur aléatoirement plutôt que de façon synchronisée permet de mieux amortir la puissance réactive échangée et donc la réponse en tension, au cours de phases transitoires.

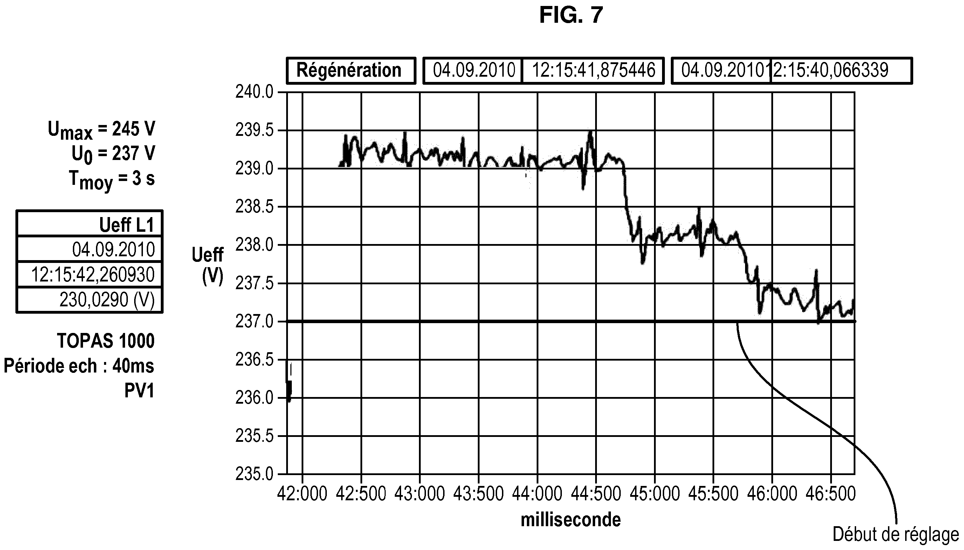

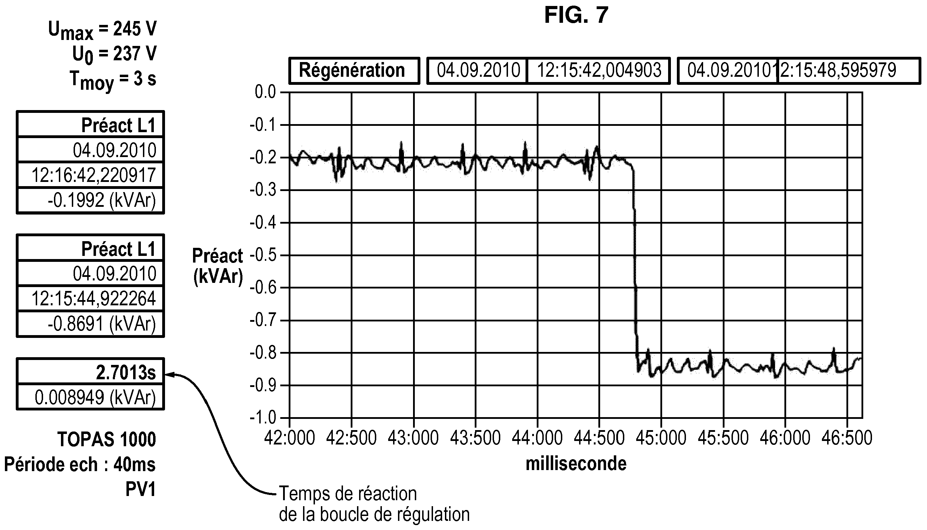

Enfin on a illustré en figure 7 des résultats d'expérimentation sur le terrain. Sur le graphique du haut est représentée la tension dans le réseau en fonction du temps. La tension maximale à ne pas dépasser vaut 245 V .

Sur le graphique du bas est représentée la valeur de la puissance réactive générée au même moment par l'onduleur en fonction du temps : elle est négative est correspond par conséquent à une puissance réactive absorbée par celui-ci.

On constate que lorsque la tension sur le diagramme du haut reste supérieure à la valeur de 237V (c'est un exemple pour U0 mais ce seuil peut être égal à une autre valeur) pendant plus de 2.7 secondes (temps de réaction de la boucle de régulation), l'onduleur réagit simultanément (sur le diagramme du bas) selon la droite Q=f(U) et absorbe une puissance réactive pour faire diminuer la tension (diminution visible sur le diagramme du haut).

On a donc mis au point un procédé de régulation de tension au niveau d'un point de raccordement d'une source décentralisée, qui permet une régulation en temps réel de la tension, et ne nécessite donc pas d'intervention particulière sur le réseau. En outre, cette régulation permet de maintenir la puissance active injectée sur le réseau, ce qui évite de léser le producteur.

## Revendications

1. Procédé de gestion d'une unité de production d'électricité décentralisée photovoltaïque (100) raccordée à un réseau électrique alternatif basse tension (R), comprenant une source électrique (110) connectée à un onduleur photovoltaïque (120) afin de permettre son raccordement au réseau électrique (R) en régulant la tension du réseau au niveau du raccordement de la source électrique décentralisée afin de maintenir la tension du réseau dans une plage réglementaire, le procédé comprenant une étape de mesure de la tension (U) sur le réseau électrique (R) au point de raccordement, et une étape de pilotage de l'onduleur (120) permettant un contrôle d'une puissance réactive (Q) échangée afin d'absorber les surtensions sur ledit réseau électrique (R), **caractérisé en ce que** ladite tension (U) est une moyenne temporelle sur une période (T_{moy}) supérieure à une seconde d'une tension (Vᵣₑₛ) mesurée
au dit point de raccordement,.

2. Procédé de gestion selon la revendication 1, dans lequel la tension (U) est une moyenne sur une période (T_{moy}) égale à trois secondes.

3. Procédé de gestion selon l'une des revendications 1 à 2, dans lequel la puissance réactive échangée par l'onduleur (120) est une fonction affine de la tension (U) mesurée au point de raccordement quand celle-ci est comprise entre la tension nominale du réseau, majorée de 10%, et une tension inférieure, dont la valeur dépend des paramètres de l'onduleur.

4. Procédé de gestion selon la revendication 3, dans lequel l'onduleur photovoltaïque (120) absorbe une puissance réactive (Q) croissante avec la tension (U) mesurée au point de raccordement.

5. Unité de production d'électricité décentralisée photovoltaïque (100) raccordée à un réseau électrique (R), comprenant une source électrique photovoltaïque (110) connectée à un onduleur photovoltaïque (120), afin de permettre son raccordement au réseau électrique (R) au niveau d'un point de raccordement, ladite unité de production (100) comprenant en outre :
- des moyens pour mesurer une tension au niveau du point de raccordement, et
- un asservissement (A) de l'onduleur photovoltaïque (120) en fonction de la tension mesurée au niveau du point de raccordement afin que celui-ci absorbe les surtensions dans le réseau électrique (R) par absorption de puissance électrique réactive, **caractérisé en ce que** les moyens de mesure de la tension effectuent une moyenne temporelle de la tension mesurée au point de raccordement sur une période supérieure à une seconde.

6. Unité de production (100) selon la revendication 5, dans laquelle l'asservissement (A) reçoit un courant continu et une tension mesurée (vᵣₑₛ) au point de raccordement, et comprend un niveau (140) de génération d'une commande de puissance réactive (Q_{ref}) en fonction de la tension mesurée (vᵣₑₛ), un niveau (150) de génération de la tension continue en entrée d'un onduleur (123) en tension, et de la tension de commande d'une MLI (162) disposée à un niveau (160) de commande de l'onduleur (123), l'onduleur (123) étant disposé à un niveau (170) de système, et délivrant un courant alternatif de puissance réactive correspondant à la commande (Q_{ref}).

7. Réseau de distribution d'électricité (R) **caractérisé en ce qu'**il comprend au moins une unité de production d'électricité décentralisée photovoltaïque (100) selon l'une des revendications 5 ou 6.

8. Réseau de distribution d'électricité (R) selon la revendication 7, **caractérisé en ce qu'**il comprend une pluralité d'unités de production d'électricité décentralisées (100), et dans lequel les tensions mesurées aux points de raccordement sont moyennées selon des temps réglés aléatoirement.

## Patentansprüche

1. Verwaltungsverfahren einer dezentralisierten photovoltaischen Stromerzeugungseinheit (100), die an ein Niedrigspannungs-Wechselstromnetz (R) angeschlossen ist, umfassend eine Stromquelle (110), die an einen photovoltaischen Wechselstromrichter (120) angeschlossen ist, um seinen Anschluss an das Stromnetz (R) per Regulierung der Spannung des Netzes am Anschluss der dezentralisierten Stromquelle zu ermöglichen, um die Spannung des Netzes in einem vorgeschriebenen Bereich zu halten, wobei das Verfahren einen Messschritt der Spannung (U) auf dem Stromnetz (R) am Anschlusspunkt und einen Steuerschritt des Wechselstromrichters (120) umfasst, der eine Kontrolle einer reaktiven Leistung (Q) zulässt, die ausgetauscht ist, um die Überspannungen auf dem genannten Stromnetz (R) aufzufangen, **dadurch gekennzeichnet, dass** die genannte Spannung (U) ein zeitlicher Durchschnitt über eine Periode (Tₘₒᵥ) ist, die größer ist als eine Sekunde einer Spannung (Vᵣₑₛ), die an dem genannten Anschlusspunkt gemessen ist.

2. Verwaltungsverfahren gemäß Anspruch 1, bei dem die Spannung (U) ein Durchschnitt über eine Periode (Tₘₒᵥ) von gleich drei Sekunden ist.

3. Verwaltungsverfahren gemäß einem der Ansprüche 1 bis 2, bei dem die durch den Wechselstromrichter (120) ausgetauschte reaktive Leistung eine affine Funktion der Spannung (U) ist, die am Anschlusspunkt gemessen ist, wenn dieser zwischen der nominalen Spannung des Netzes, zuzüglich 10 %, und einer niedrigeren Spannung, deren Wert von den Parametern des Wechselstromrichters abhängt, inbegriffen ist.

4. Verwaltungsverfahren gemäß Anspruch 3, bei dem der photovoltaische Wechselstromrichter (120) eine reaktive Leistung (Q) auffängt, die mit der am Anschlusspunkt gemessenen Spannung (U) steigt.

5. Photovoltaische, dezentralisierte Stromerzeugungseinheit (100), die an ein Stromnetz (R) angeschlossen ist, umfassend eine photovoltaische Stromquelle (110), die an einen photovoltaischen Wechselstromrichter (120) angeschlossen ist, um seinen Anschluss an das Stromnetz (R) an einem Anschlusspunkt zu erlauben, wobei die genannte Erzeugungseinheit (100) darüber hinaus umfasst:
- Mittel zum Messen einer Spannung am Anschlusspunkt und
- ein Regelungssystem (A) des photovoltaischen Wechselstromrichters (120) in Abhängigkeit von der am Anschlusspunkt gemessenen Spannung, damit dieser die Überspannungen im Stromnetz (R) per Auffangen der reaktiven Stromleistung auffängt, **dadurch gekennzeichnet, dass** die Messmittel der Spannung ein zeitliches Mittel der Spannung durchführen, die am Anschlusspunkt über eine Periode von mehr als eine Sekunde gemessen ist.

6. Erzeugungseinheit (100) gemäß Anspruch 5, bei der das Regelungssystem (A) einen Gleichstrom und eine gemessene Spannung (Vᵣₑₛ) am Anschlusspunkt empfängt und ein Erzeugungsniveau (140) einer reaktiven Leistungssteuerung (Q_{ref}) in Abhängigkeit von der gemessenen Spannung (Vᵣₑₛ), ein Erzeugungsniveau (150) der Gleichspannung am Eingang eines Wechselstromrichters (123) unter Spannung und Steuerspannung einer MLI (162), die auf einem Steuerniveau (160) des Wechselstromrichters (123) angeordnet ist, umfasst, wobei der Wechselstromrichter (123) auf einem Systemniveau (170) angeordnet ist und einen Wechselstrom mit reaktiver Leistung ausgibt, die der Steuerung (Q_{ref}) entspricht.

7. Stromverteilungssystem (R), **dadurch gekennzeichnet, dass** es wenigstens eine photovoltaische, dezentralisierte Stromerzeugungseinheit (100) gemäß einem der Ansprüche 5 oder 6 umfasst.

8. Stromverteilungsnetz (R) gemäß Anspruch 7, **dadurch gekennzeichnet, dass** es eine Vielzahl von dezentralisierten Stromerzeugungseinheiten (100) umfasst, und bei dem die an den Anschlusspunkten gemessenen Spannungen gemäß den zufällig eingestellten Zeiten gemittelt sind.

## Claims

1. Method for managing a photovoltaic decentralised electricity production unit (100) connected to a low-voltage AC electric network (R), comprising an electrical source (110) connected to a photovoltaic inverter (120) in order to allow for the connection thereof to the electric network (R) by regulating the voltage of the network at the connection of the decentralised electrical source so as to maintain the voltage of the network in a regulatory range, with the method comprising a step of measuring the voltage (U) on the electric network (R) at the connection point, and a step of controlling the inverter (120) that allows for the controlling of an exchanged reactive power (Q) in order to absorb the overvoltage on said electric network (R), **characterised in that** said voltage (U) is a temporal average over a period (T_{moy}) greater than one second of a voltage (Vᵣₑₛ) measured at said connection point.

2. Method for managing according to claim 1, wherein the voltage (U) is an average over a period (T_{moy}) equal to three seconds.

3. Method for managing according to one of claims 1 to 2, wherein the reactive power exchanged by the inverter (120) is a linear function of the voltage (U) measured at the connection point when the latter is between the nominal voltage of the network, plus 10%, and a lower voltage, of which the value depends on the parameters of the inverter.

4. Method for managing according to claim 3, wherein the photovoltaic inverter (120) absorbs a reactive power (Q) increasing with the voltage (U) measured at the connection point.

5. Photovoltaic decentralised electricity production unit (100) connected to an electric network (R), comprising a photovoltaic electrical source (110) connected to a photovoltaic inverter (120), in order to allow for the connection thereof to the electric network (R) on a connection point, said production unit (100) further comprising:
- means for measuring a voltage on connection point, and
- a feedback control (A) of the photovoltaic inverter (120) according to the voltage measured on the connection point so that the latter absorbs the overvoltage in the electric network (R) via the absorption of reactive electrical power, **characterised in that** the means of measurement of the voltage carry out a temporal average of the voltage measured at the connection point over a period greater than one second.

6. Production unit (100) according to claim 5, wherein the feedback control (A) received a direct current and a voltage measured (Vᵣₑₛ) at the connection point, and comprises a level (140) of generation of a reactive power control (Oᵣₑₜ) according to the voltage measured (Vᵣₑₛ), a level (150) of generation of the direct voltage at the input of a voltage inverter (123), and of the control voltage of an MLI (162) arranged at a control level (160) of the inverter (123), the inverter (123) being arranged at a system level (170), and delivering a reactive power AC current corresponding to the control (Q_{ref}).

7. Electricity distribution network (R) **characterised in that** it comprises at least one photovoltaic decentralised electricity production unit (100) according to one of claims 5 or 6.

8. Electricity distribution network (R) according to claim 7, **characterised in that** it comprises a plurality of decentralised electricity production units (100), and wherein the voltages measured at the connection points are averaged according to randomly set times.
